# EUROPEAN PATENT SPECIFICATION

(11) **EP 4 458 696 B1**
(45) Date of publication and mention of the grant of the patent: **19.11.2025**
(21) Application number: 24172922.7
(22) Date of filing: 29.04.2024
(51) Int. Cl.: B65B 19/24, B65B 19/22, B65G 47/90

(54) **PACKER MACHINE TO PRODUCE A RIGID PACK FOR SMOKING ARTICLES**
VERPACKUNGSMASCHINE ZUR HERSTELLUNG EINER STEIFEN VERPACKUNG FÜR RAUCHARTIKEL
MACHINE DE GARNITURE D'ÉTANCHÉITÉ POUR PRODUIRE UN PAQUET RIGIDE POUR ARTICLES À FUMER

(30) Priority: 02.05.2023 IT 202300008607
(43) Date of publication of application: 06.11.2024
(73) Proprietor: G.D S.p.A., 40133 Bologna (IT)
(72) Inventor: BARBIERI, Giulio, 40133 BOLOGNA (IT); MECCAGNI, Mattia, 40133 BOLOGNA (IT)
(74) Representative: Studio Torta S.p.A.

(56) References cited:
- EP-A1- 3 925 896
- CN-A- 111 620 099
- CN-U- 210 150 095
- CN-U- 213 140 617
- DE-A1- 1 506 515
- DE-U1- 8 703 173
- US-A- 3 608 701

## Description

### CROSS-REFERENCE TO RELATED APPLICATIONS

This patent application claims priority from Italian patent application no. 102023000008607 filed on May 2, 2023.

### TECHNICAL FIELD

The present invention relates to a packer machine to produce a rigid pack for smoking articles.

The present invention can be applied advantageously to the manufacturing of a wrap of a rigid pack for cigarettes with a hinged lid by folding a wrapping sheet of metallized paper around a group of cigarettes, to which the following discussion will make explicit reference without any loss of generality.

### PRIOR ART

Rigid packs for cigarettes with a hinged lid currently are the most widespread packs for cigarettes on the market since they are simple to manufacture, are easy and practical to use, and offer a good protection to the cigarettes contained therein.

A rigid pack for cigarettes with a hinged lid comprises a wrap consisting of a group of cigarettes wrapped in a sheet of metallized paper and a rigid outer shell which houses the wrap therein. The outer shell consists of a cup-shaped container, which houses the group of cigarettes and has an open upper end, and a lid, which is also cup-shaped and is hinged to the container so as to rotate, relative to the container, between an open position and a closed position of the open end.

Patent application EP3725691A1 describes a packer machine for producing a rigid pack for cigarettes having: a wrap formed by folding a wrapping sheet of metallized paper around a group of cigarettes, and an outer container formed by folding a blank and a collar around the wrap. The following is provided: a forming conveyor, which moves a plurality of first pockets along a forming path; a hopper, which is arranged in front of the forming conveyor and along the forming path and is provided with at least one output mouth, from which the group of cigarettes can be extracted; a wrapping conveyor, which is arranged downstream of the forming conveyor and is designed to move the group of cigarettes and the wrapping sheet along a first straight and horizontal wrapping path; a first wrapping wheel, which is arranged downstream of the wrapping conveyor, supports at least a second pocket designed to contain the wrap and the collar, and is mounted in a rotatable manner around a first horizontal rotation axis parallel to the first wrapping path so as to move the second pocket along a second circular wrapping path; a second wrapping wheel, which is arranged downstream of the first wrapping wheel, supports at least a third pocket designed to contain the wrap, the collar and the blank, and is mounted in a rotatable manner around a second horizontal rotation axis parallel to the first rotation axis so as to move the third pocket along a third circular wrapping path; and a transfer conveyor, which is interposed between the wrapping conveyor and the first wrapping wheel and transfers the wrap from the wrapping conveyor to the first wrapping wheel along a transfer path perpendicular to the first wrapping path and perpendicular to the first rotation axis.

In the packer machine described above it is necessary to transport the wraps being formed from the wrapping conveyor to the transfer conveyor without damaging the wraps due to an excessive compression of the wraps and, simultaneously, without leaving the wraps excessively free so as to avoid an undesired uncontrolled deformation of the wraps (which are not provided with glue and thus tend to lose their shape if not suitably contained).

Patent US3608701A1 describes an adjustable transport drawer for the products of a packer machine; the drawer is equipped with a dividing element mounted in a sliding manner on the lower wall of the drawer. EP 3 925 896 A1 discloses a packer machine according to the preamble of claim 1.

### DESCRIPTION OF THE INVENTION

The object of the present invention is to provide a packer machine for producing a rigid pack for smoking articles which allows transporting in a safe manner a product, in particular a wrap consisting of a group of smoking articles wrapped in a wrapping sheet of metallized paper, also operating at a high production speed.

In accordance with the present invention, a packer machine for producing a rigid pack for smoking articles is provided, as claimed in the appended claims.

The claims describe embodiments of the present invention and constitute an integral part of the present description.

### BRIEF DESCRIPTION OF THE DRAWINGS

The present invention will now be described with reference to the accompanying drawings, which illustrate a non-limiting example embodiment thereof, wherein:
- Figure 1 is a front perspective view, in a closed configuration, of a rigid pack for cigarettes;
- Figure 2 is a rear perspective view of the pack for cigarettes of Figure 1, in a closed configuration;
- Figure 3 is a front perspective view of the pack for cigarettes of Figure 1, in an open configuration;
- Figure 4 is a front perspective view of a wrap of the pack of Figure 1;
- Figure 5 is a perspective view of a group of cigarettes contained in the wrap of Figure 4;
- Figure 6 is a plan view of a wrapping sheet utilized for manufacturing the wrap of Figure 4;
- Figure 7 is a plan view of a collar of the pack for cigarettes of Figure 1;
- Figure 8 is a plan view of a blank utilized for manufacturing an outer container provided with a hinged lid of the pack for cigarettes of Figure 1;
- Figure 9 is a schematic perspective view, with parts removed for clarity, of a packer machine which produces the pack for cigarettes of Figure 1 and is manufactured in accordance with the present invention;
- Figure 10 is a schematic perspective view, with parts removed, of a part of the packer machine of Figure 9;
- Figures 11 and 12 are two different perspective views, with parts removed for clarity, of a drawer of transport units of the packer machine of Figure 9;
- Figure 13 is an exploded perspective view, with parts removed for clarity, of part of the drawer of Figures 11 and 12;
- Figure 14 is a perspective view, with in evidence screws, of part of the drawer of Figures 11 and 12;
- Figures 15 and 16 are two cross-section views of the drawer of Figures 11 and 12, in two different operating conditions; and
- Figure 17 is a longitudinal section view of the drawer of Figures 11 and 12.

### PREFERRED EMBODIMENTS OF THE INVENTION

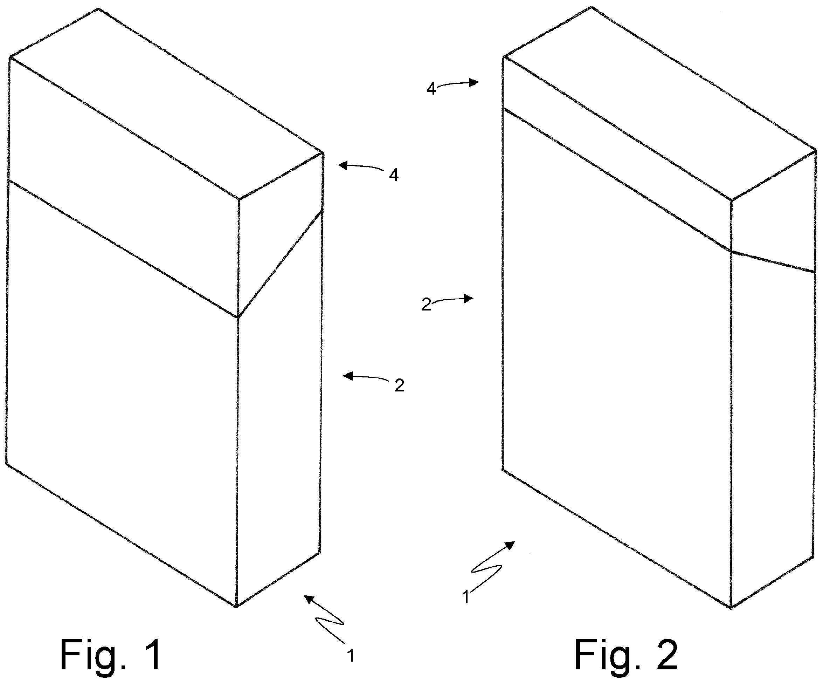

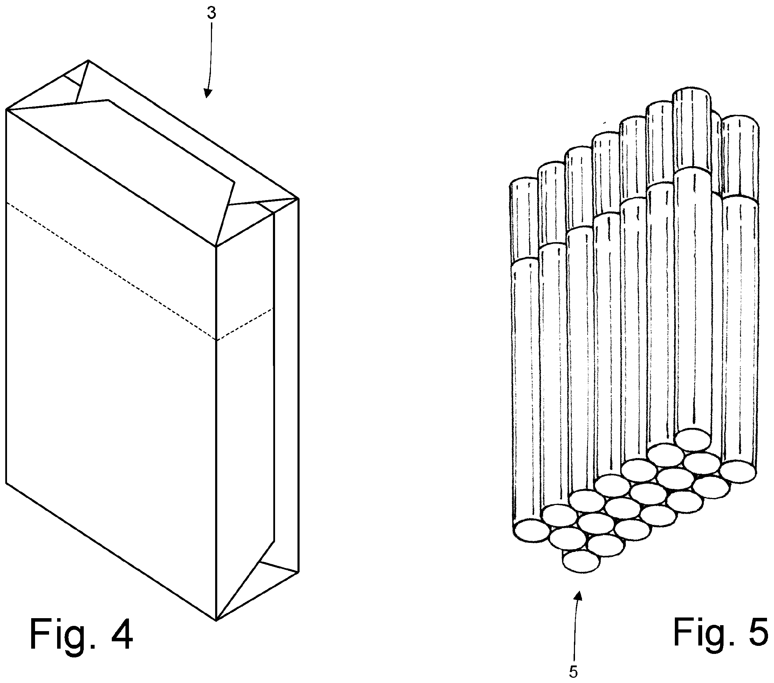

In Figures 1, 2 and 3, reference number 1 indicates, as a whole, a rigid pack for cigarettes. The pack 1 for cigarettes comprises a cup-shaped outer container 2 made of cardboard or rigid paperboard and a wrap 3 (better illustrated in Figure 4) housed inside the container 2.

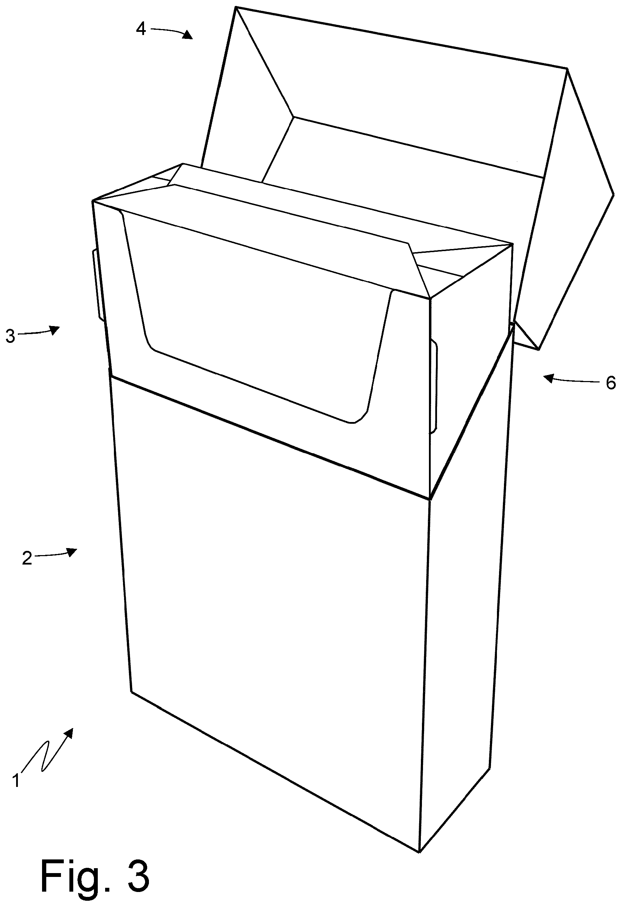

The outer container 2 has an open upper end and is provided with a lid 4, which is cup-shaped and is hinged to the outer container 2 along a hinge (illustrated in Figure 2) so as to rotate, relative to the outer container 2, between an open position (illustrated in Figure 3) and a closed position (illustrated in Figures 1 and 2) of the open upper end.

The wrap 3 encloses a group 5 of cigarettes (illustrated in Figure 5) with a parallelepiped shape and has, at the top and at the front, a removable portion which is separated from the rest of the wrap 3 by a pre-weakened tearable line.

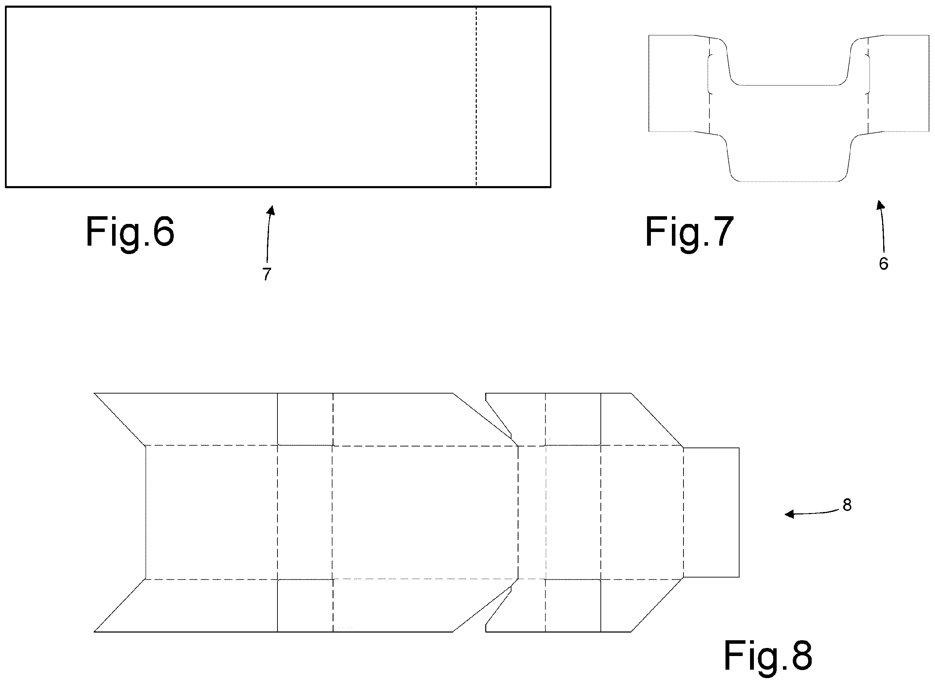

According to what is illustrated in Figures 3 and 7, the pack 1 for cigarettes further comprises a rigid collar 6, which is connected (by means of gluing) folded in a "U" shape on the inside of the outer container 2 so as to partially project on the outside of the open upper end of the outer container 2 and engage a corresponding inner surface of the lid 4 when the lid 4 is arranged in the closed position.

According to what is illustrated in Figure 6, the wrap 3 is made by folding around the group 5 of cigarettes a wrapping sheet 7 provided, on a side, with the tearable line which delimits the removable portion.

According to a preferred embodiment, the final shape of the wrapping sheet 7 around the group 5 of cigarettes is not stabilized in any manner (i.e. no glue is applied to the wrapping sheet 7 and no seals are made on the wrapping sheet 7); consequently, the final shape of the wrapping sheet 7 around the group 5 of cigarettes is maintained only by effect of the containing action of the outer container 2.

According to what is illustrated in Figure 8, the outer container 2 and the lid 4 are made by folding a blank 8 of conventional type.

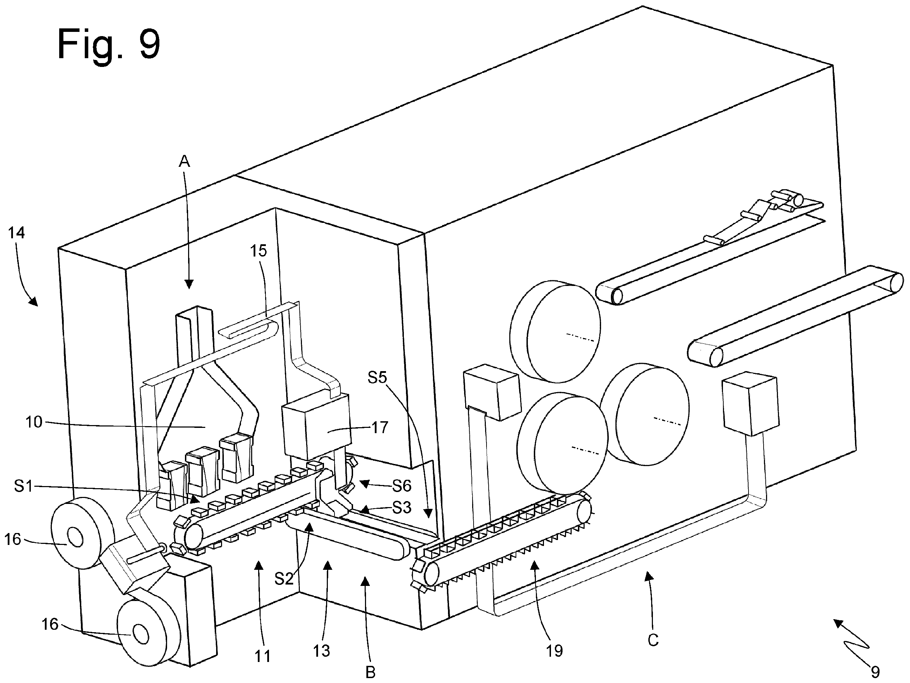

In Figure 9, reference number 9 indicates, as a whole, a packer machine which is designed to manufacture the pack 1 for cigarettes described above and operates with an intermittent motion (i.e. a motion which provides for a cyclic alternation of motion phases and standstill phases).

The packer machine 9 comprises a forming unit A, in which the groups 5 of cigarettes are formed in succession, a wrapping unit B, in which a respective wrapping sheet 7 is wrapped around each group 5 of cigarettes so as to produce a wrap 3, and a wrapping unit C, in which a collar 6 and a blank 8 are wrapped around each wrap 3 so as to produce an outer container 2 provided with lid 4.

The forming unit A of the groups 5 of cigarettes comprises a hopper 10 provided with three output mouths for simultaneously supplying three groups 5 of cigarettes to three respective pockets 11 of a forming conveyor 12 which supports a plurality of pockets 11 and moves stepwise so as to cyclically move the pockets 11 along a forming path P1. The forming path P1 develops between an input station S1, in which each group 5 of cigarettes is extracted from an output mouth of the hopper 10 and enters a corresponding pocket 11 of the forming conveyor 12, and a transfer station S2, in which each group 5 of cigarettes is extracted from the corresponding pocket 11 of the forming conveyor 12.

The wrapping unit B comprises a wrapping conveyor 13 designed to move each group 5 of cigarettes along a straight and horizontal wrapping path P2. In particular, the wrapping path P2 extends from the transfer station S2, in which the wrapping conveyor 13 extracts each group 5 of cigarettes from the corresponding pocket 11 of the forming conveyor 12, passes through a supply station S3, in which each group 5 of cigarettes couples to a corresponding wrapping sheet 7 which folds in a "U" shape around the group 5 of cigarettes, and ends in a transfer station S4, in which each wrap 3 (formed by a wrapping sheet 7 at least partially folded around a group 5 of cigarettes) leaves the wrapping conveyor 13.

Along the wrapping path P2 (at the wrapping conveyor 13) a supply station S3 is present, in which each wrapping sheet 7 is arranged so as to be intercepted by a corresponding group 5 of cigarettes around which the wrapping sheet 7 folds in a "U"-shape; in other words, each group 5 of cigarettes moving along the wrapping path P2 intercepts a corresponding wrapping sheet 7 arranged in the supply station S3 determining the "U"-shape folding of the wrapping sheet 7.

The packer machine 9 comprises a supply device 14, which cyclically supplies the wrapping sheets 7 into the supply station S3, i.e. arranges each wrapping sheet 7 in the supply station S3 in such a manner that the wrapping sheet 7 is intercepted by a corresponding group 5 of cigarettes moving along the wrapping path P2. According to what is illustrated in Figure 9, the supply device 14 comprises an unwinding station, in which a band 15 of wrapping material is unwound from a reel 16 and is moved (passing next to the hopper 10) towards a cutting member 17 of known type which is arranged above the supply station S3 and cyclically performs a transversal cut of the band 15 of wrapping material so as to separate the individual wrapping sheets 7 from the band 15 of wrapping material.

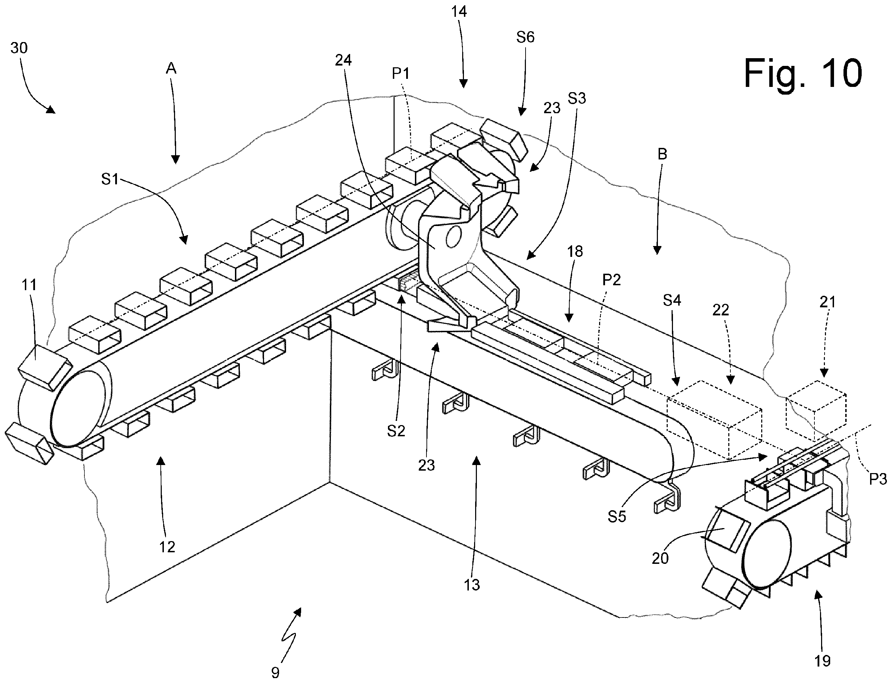

According to what is illustrated in Figure 10, the wrapping unit B comprises a folding device 18 which is arranged along the wrapping path P2 at the wrapping conveyor 13 and is designed to fold two open side ends of each wrapping sheet 7 folded in a "U"-shape around a corresponding group 5 of cigarettes so as to form a tubular wrap having an open rear end. Preferably, the folding device 18 only comprises folding profiles (i.e. folding spirals) which are fixed (i.e. totally without parts in movement) and are arranged on opposite sides of the wrapping path P2.

The wrapping path P2 starts in the transfer station S2 (in which the groups 5 of cigarettes enter the wrapping conveyor 13) and ends in the transfer station S4 (in which the wraps 3 leave the wrapping conveyor 13). According to what is illustrated in Figure 10, the packer machine comprises a transfer conveyor 19 which receives the wraps 3 in a transfer station S5 and moves the wraps 3 along a straight transfer path P3 perpendicular to the wrapping path P2. The transfer conveyor 19 comprises a conveyor belt with an annular shape, which is wrapped around two end pulleys (one of which is motorized), supports a plurality of pockets 20 each designed to house a corresponding wrap 3, and moves stepwise so as to cyclically move the pockets 20 along the transfer path P3.

According to what is illustrated in Figure 10, the wrapping unit B comprises a folding device 21 which is arranged downstream of the folding device 18 and is designed to complete a folding of each wrapping sheet 7 around the corresponding group 5 of cigarettes (and thus end the manufacturing of the wrap 3) so as to close the open rear end (i.e. previously left open by the folding device 18).

Between the wrapping conveyor 13 and the transfer conveyor 19, a transport unit 22 is interposed which is configured to transfer the wraps 3 from the transfer station S4 (i.e. from the output of the wrapping conveyor 13) to the transfer station S5 (i.e. to the input of the transfer conveyor 19) along a prolongation of the wrapping path P2.

According to what is illustrated in Figure 10, the supply device 14 comprises two folding spindles 23 which are supported by a moving conveyor 24 which cyclically moves each folding spindle 23 between a receiving station S6, in which each wrapping sheet 7 is coupled to the folding spindle 23, and the supply station S3 at the wrapping path P2 and in which the wrapping sheet 7 is coupled to a group 5 of cigarettes which, moving along the wrapping path P2, intercepts the wrapping sheet 7 which folds in a "U"-shape around the group 5 of cigarettes.

For further details on the packer machine 9, reference is made to what is described in patent application EP3725691A1.

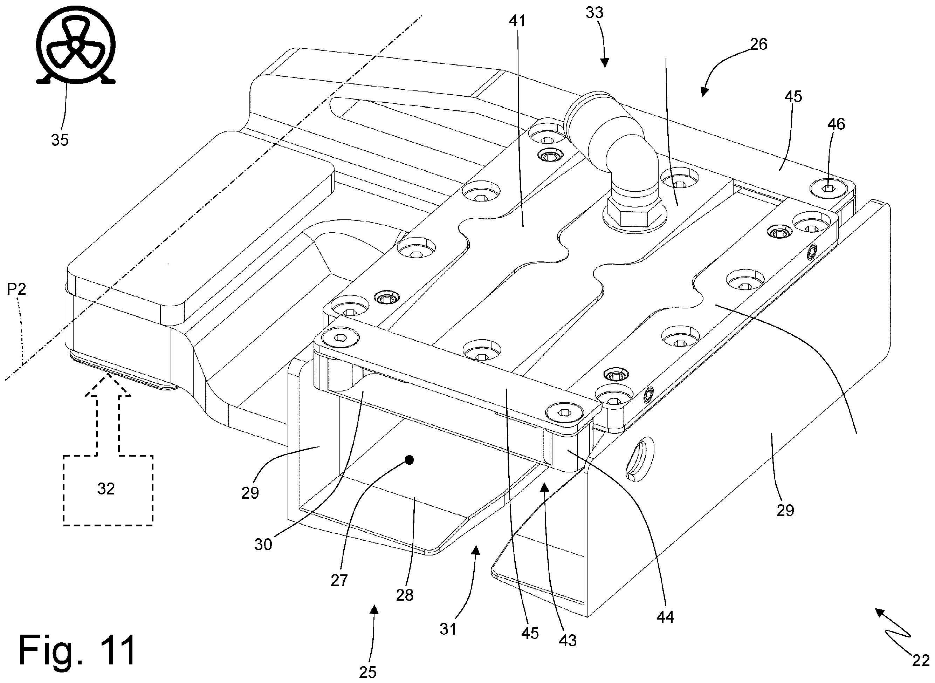

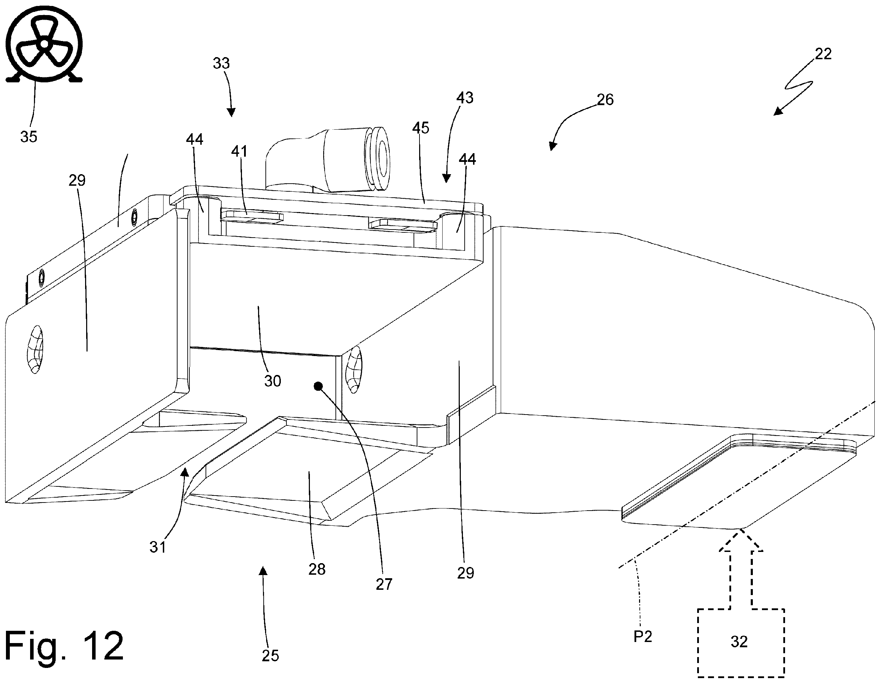

As mentioned in the foregoing, the transport unit 22 is configured to transport each wrap 3 along the wrapping path P2 (i.e. along a prolongation of the wrapping path P2) from the transfer station S4 (i.e. from the output of the wrapping conveyor 13) to the transfer station S5 (i.e. at the input of the transfer conveyor 19). According to what is illustrated in Figures 11 and 12, the transport unit 22 comprises a drawer 25 provided with a frame 26 with a parallelepiped shape, in which is defined a pocket 27 with a parallelepiped shape configured to house a wrap 3. In particular, the pocket 27 has a tubular shape (i.e. is open at the two opposite ends) and thus has two openings opposite each other through which a wrap 3 enters (in the transfer station S4) the pocket 27 and subsequently exits (in the transfer station S5) the pocket 27.

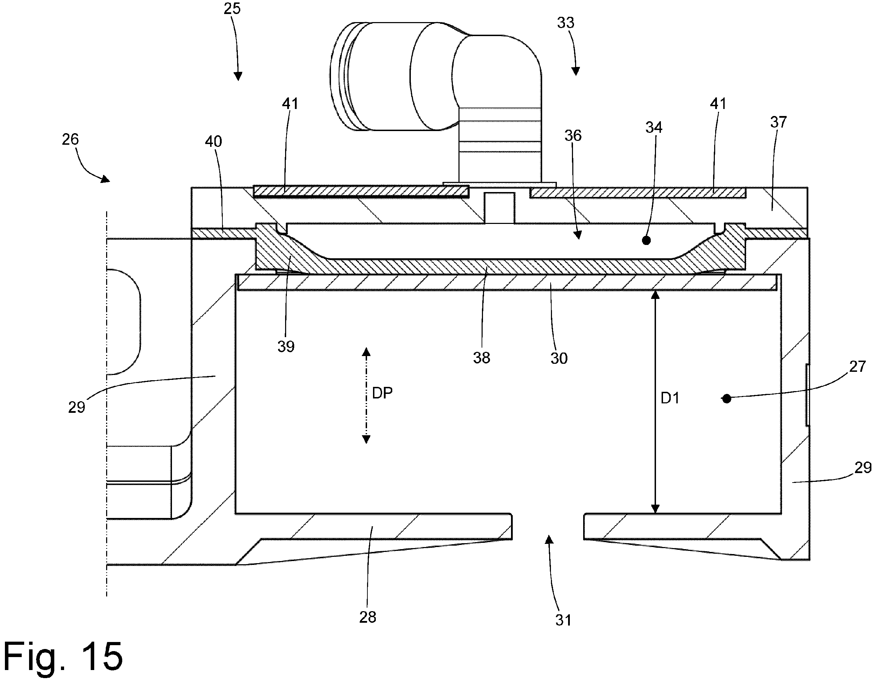

The pocket 27 is delimited by a base wall 28 which is integral with the frame 26 (i.e. in use does not make any type of movement with respect to the frame 26), by two side walls 29 which are integral with the frame 26 (i.e. in use do not make any type of movement with respect to the frame 26) and are arranged perpendicular to the base wall 28, and by a containing wall 30 which is parallel to and opposite the base wall 28 and is mounted in a movable manner on the frame 26 so as to move with respect to the frame 26 approaching the base wall 28 or moving away from the base wall 28. Namely, the containing wall 30 is movable with respect to the frame 26 so as to move along a holding direction DP (illustrated in Figures 15, 16 and 17) which is perpendicular to the base wall 28 and to the containing wall 30 and is thus parallel to the side walls 29.

According to a preferred embodiment, the base wall 28 of the pocket 27 centrally has a slit 31 passing through which a guide can be inserted which precedes a wrap 3 in the transfer station S4 (in which a wrap 3 enters the pocket 27) and/or a pusher which pushes a wrap 3 into the transfer station S5 (in which a wrap 3 exits the pocket 27).

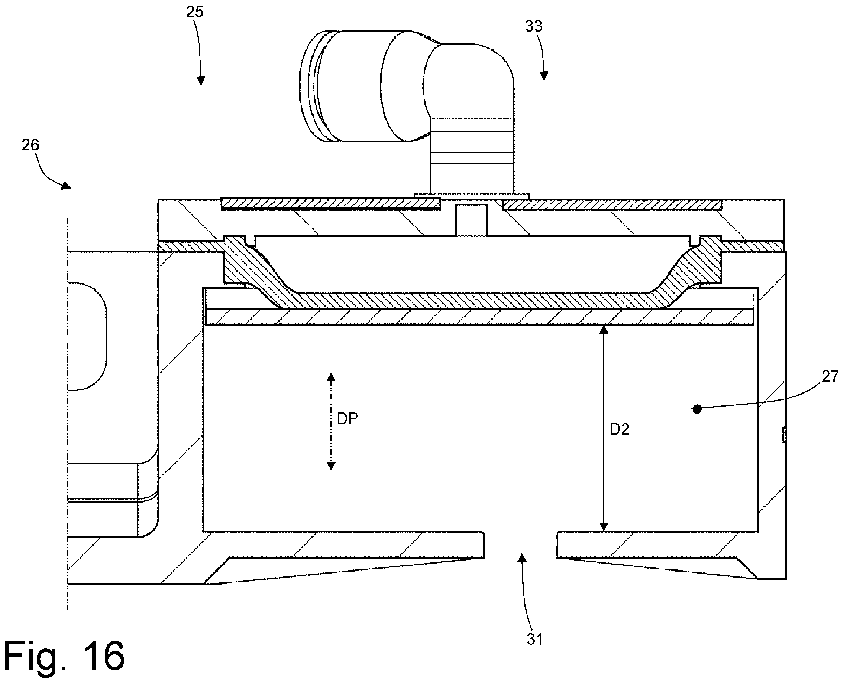

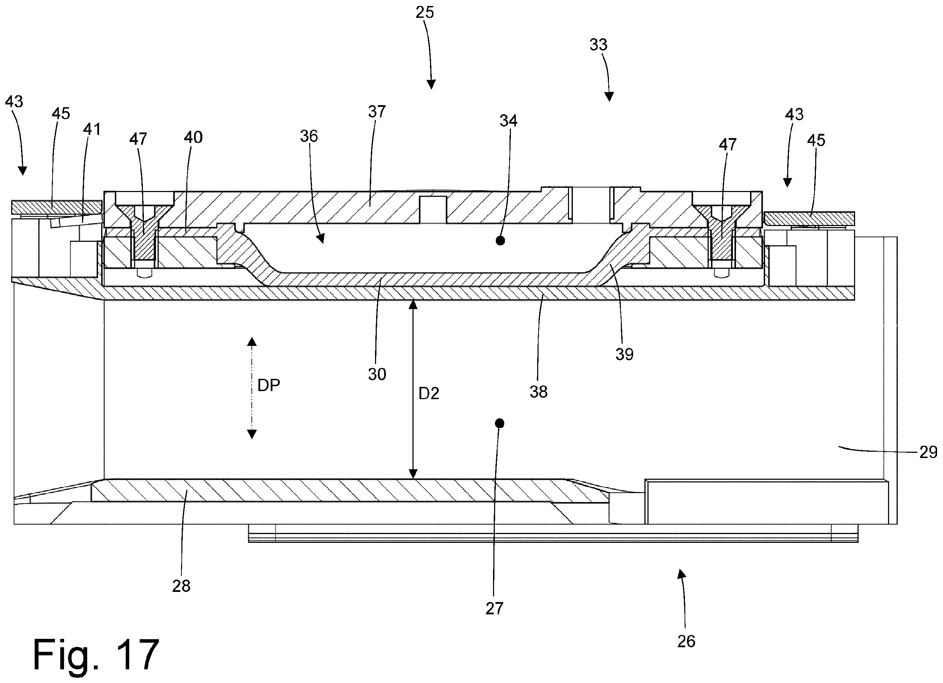

The containing wall 30 is mounted in a movable manner on the frame 26 so as to move between a loading and unloading position (illustrated in Figure 15), in which it gives the pocket 27 a dimension D1 (measured along the holding direction DP) and a transport position (illustrated in Figures 16 and 17), in which it gives the pocket 27 a dimension D2 (measured along the holding direction DP) smaller than the dimension D1.

All of the walls 28, 29 and 30, in use, come into contact with a wrap 3 when the wrap 3 enters the transfer station S4 in the pocket 27. In the transfer station S4 (in which a wrap 3 enters the pocket 27) and in the transfer station S5 (in which a wrap 3 exits the pocket 27) the pocket 27 is arranged in the loading and unloading position (illustrated in Figure 15) so as to facilitate the sliding of the wrap 3 with respect to the walls 28, 29 and 30 of the pocket 27 (i.e. to avoid that the wrap 3 is pressed against the walls 28, 29 and 30 of the pocket 27, thus increasing the friction against the walls 28, 29 and 30 of the pocket 27). Whereas, between the transfer station S4 (in which a wrap 3 enters the pocket 27) and the transfer station S5 (in which a wrap 3 exits the pocket 27), i.e. during the movement of the pocket 27 along the wrapping path P2, the pocket 27 is arranged and maintained in the transport position (illustrated in Figures 16 and 17) so as to compress the wrap 3 housed in the pocket 27 and thus prevent, by effect of the accelerations and decelerations to which the pocket 27 is subject during the movement, the wrap 3 from deforming in an uncontrolled manner (the wrap 3 is without glue and thus tends to lose its shape if not suitably contained).

As illustrated in Figures 11 and 12, the transport unit 22 comprises a conveyor device 32 which is configured to move the drawer 25 along the wrapping path P2. In the embodiment illustrated in the accompanying figures, the wrapping path P2 is linear and thus the conveyor device 32 moves the drawer 25 forward and backward in straight line between the transfer stations S4 and S5; according to a different embodiment not illustrated, the wrapping path P2 could be circular and thus the conveyor device 32 (having a drum mounted in a rotatable manner) moves the drawer 25 along a circle which in succession passes through the transfer stations S4 and S5 (in this embodiment the conveyor device 32 could support a plurality of drawers 25).

According to what is illustrated in Figures 15, 16 and 17, the transport unit 22 comprises an actuator device 33 which can be operated for pushing the containing wall 30 towards the transport position (illustrated in Figures 16 and 17). Preferably, the actuator device 33 is pneumatic, i.e. utilizes the thrust generated by a fluid (for example air) under pressure. According to what is illustrated in Figures 15, 16 and 17, the actuator device 33 comprises an actuation chamber 34 which is arranged next to the containing wall 30, can be connected through a solenoid valve to a source 35 of fluid under pressure (for example compressed air), and is configured to press against the containing wall 30 when it is in overpressure conditions. In particular, the actuator device 33 comprises a flexible wall 36 which is elastically deformable, delimits the actuation chamber 34, is directly in contact with the containing wall 30 and swells pressing against the containing wall 30 when the actuation chamber 34 is in overpressure conditions. The actuator device 33 comprises an outer wall 37 which is rigid (i.e. does not deform in use), is integral with the frame 26 of the drawer 25 and defines the actuation chamber 34 together with the flexible wall 36; namely, the outer wall 37 is opposite the flexible wall 36 for enclosing the actuation chamber 34 together with the flexible wall 36. Preferably, the outer wall 37 is substantially flat, whereas the flexible wall 36 is (centrally) cup-shaped for giving a certain volume to the actuation chamber 34.

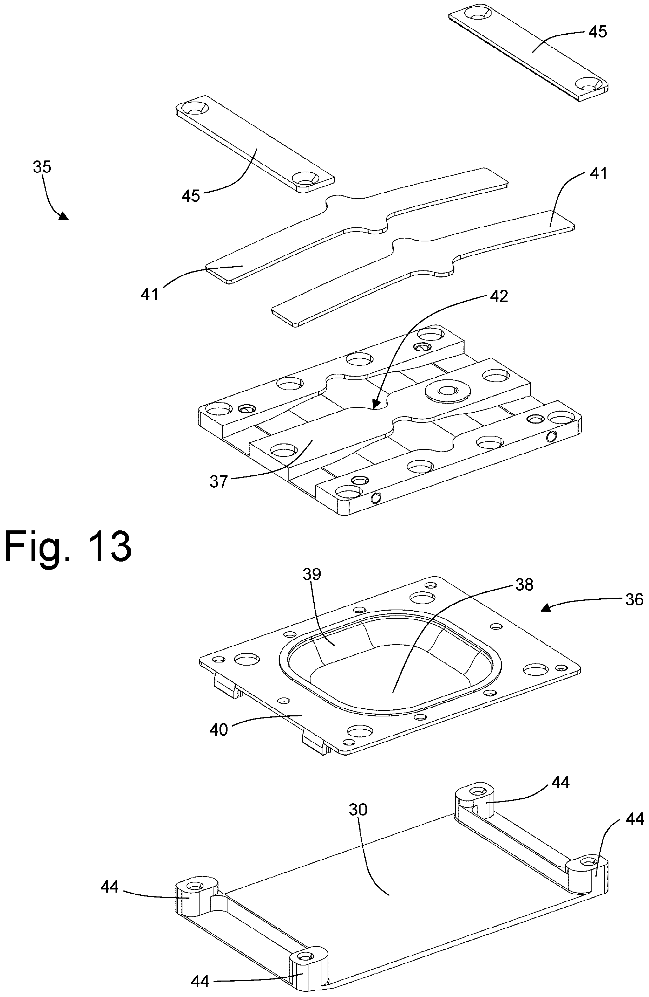

According to a preferred embodiment better illustrated in Figure 13, the flexible wall 36 comprises a central area 38 having a first thickness and a peripheral area 39 which is arranged around the central area 38 and has a second thickness greater than the first thickness. Both the central area 38, and the peripheral area 39 of the flexible wall 36 are free (i.e. are not engaged at the top and at the bottom by rigid elements) and thus, in use, can freely deform. Around the peripheral area 39, the flexible wall 36 has an edge 40 which has a third thickness smaller than the first thickness and the second thickness and is constrained to the frame 26 of the pocket 27; namely, the edge 40 of the flexible wall 36 is compressed (for creating a pneumatic sealing) between two elements of the frame 26 of the drawer 25 and in particular is compressed between the outer wall 37 and the two side walls 29.

According to a preferred embodiment better illustrated in Figures 15, 16 and 17, the central area 38 of the flexible wall 36 is flat, is coplanar to the containing wall 30 and is directly in contact with the containing wall 30, whereas the peripheral area 39 of the flexible wall 36 is curved and causes the flexible wall 36 to be cup-shaped.

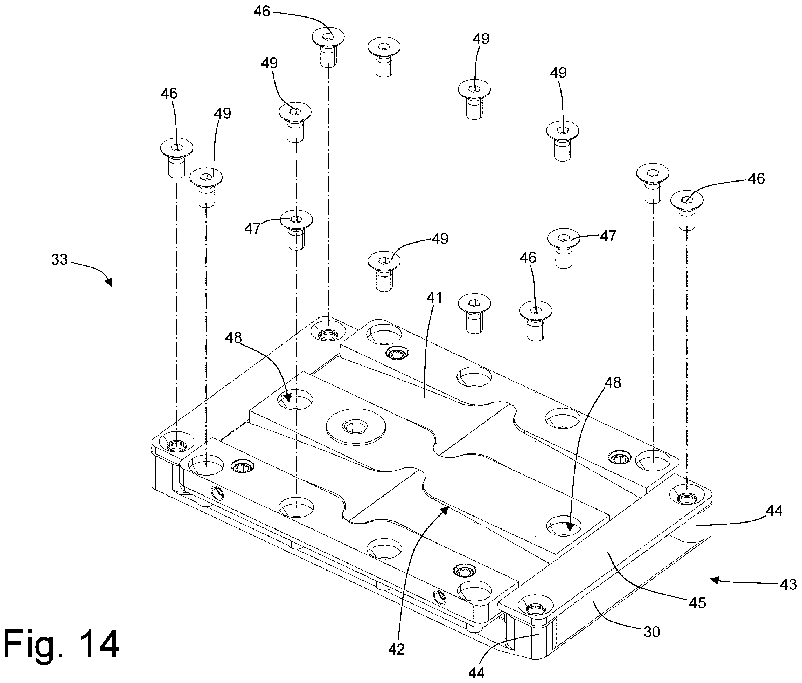

According to what is better illustrated in Figures 13 and 14, the drawer 25 is coupled to two elastic elements 41 (in particular two flat springs) which push the containing wall 30 towards the loading and unloading position (illustrated in Figure 15) and elastically deform when the actuator device 33 moves the containing wall 30 towards the transport position (illustrated in Figures 16 and 17). In particular, the two elastic elements 41 are arranged next to each other, are arranged in respective seats 42 which are obtained in an outer surface (i.e. opposite the actuation chamber 34) of the outer wall 37 and reproduce in negative the shape of the elastic elements 41; according to a preferred embodiment illustrated in the accompanying figures, each elastic element 41 centrally has a swelling (obviously present also in the respective seat 42) which determines a precise positioning of the elastic element 41 in the respective seat 42 preventing a longitudinal sliding of the elastic element 41 along the respective seat 42.

The containing wall 30 longitudinally comes out on both sides of the actuation chamber 34 (i.e. both of the flexible wall 36, and of the outer wall 37) and has, at the two ends, two annular bodies 43 inside which the elastic elements 41 are inserted for elastically pushing the containing wall 30 towards the loading and unloading position (illustrated in Figure 15). Each annular body 43 consists, on one side, of the containing wall 30 from which two columns 44 rise perpendicularly and, on the other side, of a plate 45 (against which the ends of the elastic elements 41 rest) which is fixed to the columns 44 of the containing wall 30 by means of two screws 46 (better illustrated in Figure 14). According to what is better illustrated in Figure 13, the drawer 25 comprises two striker bodies 47 against which the containing wall 30 rests in the loading and unloading position (illustrated in Figure 15); namely, the striker bodies 47 constitute end stops which establish the loading and unloading position (illustrated in Figure 15). In particular, each striker body 47 is a screw which is screwed into a threaded hole 48 obtained through the outer wall 37 of the frame 26 (externally the actuation chamber 34) and can be screwed or unscrewed in order to change the loading and unloading position (illustrated in Figure 15), i.e. in order to change the dimension D1 assumed by the pocket 27 when the containing wall 30 is in the loading and unloading position (illustrated in Figure 15). According to what is illustrated in Figure 14, also eight screws 49 are provided (obviously the number of the screws 49 could be different), each of which is arranged through a through hole obtained in the outer wall 37 and screws into a threaded dead hole obtained through a side wall 29 of the pocket 27; in this manner, the screws 49 firmly connect the outer wall 37 to the side walls 29 of the pocket 27 with the interposition of the edge 40 of the flexible wall 37.

According to a different embodiment not illustrated, all of the pneumatic actuator device 33 is replaced by an (at least one) elastic element which pushes the containing wall 30 towards the transport position (illustrated in Figures 16 and 17) and which is elastically compressed by the thrust applied by a wrap 3 when the wrap 3 enters the pocket 27. Namely, in this alternative embodiment, the movement of the containing wall 30 is completely passive, i.e. is determined by the presence of a wrap 3 in the pocket 27. This alternative embodiment generates greater stresses on a wrap 3 when the wrap 3 enters the pocket 27 since it is the wrap 3 that has to push on the containing wall 30 for moving the containing wall 30 towards the loading and unloading position (illustrated in Figure 15) and thus create the space necessary for its entering the pocket 27; on the other hand, this alternative embodiment is constructively simpler replacing all of the pneumatic actuator device 33 with an (at least one) elastic element.

It is important to observe that the compression which is applied to a wrap 3 which is inside the pocket 27 is determined by the pneumatic thrust exerted by the containing wall 30 on the wrap 3 and thus depends on the pressure of the fluid which is supplied inside the compression chamber 34; in this manner, the compression which is applied to each wrap 3 is always constant independently of the actual dimension of the wrap 3 (i.e. independently of the fact that the wrap 3 can be a little thicker or a little less thicker due to the inevitable constructive tolerances) and the compression which is applied to each wrap 3 is easily adjustable by changing the pressure of the fluid which is supplied inside the compression chamber 34.

The embodiment illustrated in the accompanying figures refers to the manufacturing of a pack for cigarettes, but the present invention is applicable without substantial modifications also to the manufacturing of any other type of pack for smoking articles (for example a pack for cigars, a pack for electronic cigarettes of the liquid vaporization type, a pack for cigarettes of new generation without tobacco combustion ...).

The transport unit 22 of the packer machine described above has numerous advantages.

Firstly, the transport unit 22 described above allows transporting in a safe manner the products (in particular the wraps 3) also operating at a high production speed. Namely, the transport unit 22 described above is capable of transporting the products (in particular the wraps 3) without damaging the products due to an excessive compression of the products and, simultaneously, without leaving the products excessively free so as to prevent an undesired uncontrolled deformation of the products (the wraps 3 are not provided with glue and thus tend to lose their shape if not suitably contained). Furthermore, the transport unit 22 described above is simple to manufacture since the drawer 25 is composed of a limited number of components which can be found in commerce or which are easy to construct.

### LIST OF THE REFERENCE NUMBERS OF THE FIGURES

- 1: pack for cigarettes
- 2: outer container
- 3: wrap
- 4: lid
- 5: group of cigarettes
- 6: collar
- 7: wrapping sheet
- 8: blank
- 9: packer machine
- 10: hopper
- 11: pockets
- 12: forming conveyor
- 13: wrapping conveyor
- 14: supply device
- 15: band
- 16: reel
- 17: cutting member
- 18: folding device
- 19: transfer conveyor
- 20: pockets
- 21: folding device
- 22: transport unit
- 23: folding spindle
- 24: moving conveyor
- 25: drawer
- 26: frame
- 27: pocket
- 28: base wall
- 29: side walls
- 30: containing wall
- 31: slit
- 32: conveyor device
- 33: actuator device
- 34: actuation chamber
- 35: source of fluid under pressure
- 36: flexible wall
- 37: outer wall
- 38: central area
- 39: peripheral area
- 40: edge
- 41: elastic element
- 42: seats
- 43: annular bodies
- 44: columns
- 45: plate
- 46: screws
- 47: striker body
- 48: threaded hole
- 49: screws
- P1: forming path
- P2: wrapping path
- P3: transfer path
- S1: input station
- S2: transfer station
- S3: supply station
- S4: transfer station
- S5: transfer station
- S6: receiving station
- A: forming unit
- B: wrapping unit
- C: wrapping unit
- DP: holding direction
- D1: dimension
- D2: dimension

## Claims

1. A packer machine (9) to produce a rigid pack (1) for smoking articles comprising: a wrap (3) formed by folding a wrapping sheet (7) around a group (5) of smoking articles, and an outer container (2) formed by folding a blank (8) around the wrap (3); the packer machine (9) comprises:
a forming conveyor (12), which moves a plurality of first pockets (11) along a forming path (P1);
a hopper (10), which is arranged in front of the forming conveyor (12) and along the forming path (P1) and is provided with at least one output mouth, from which the group (5) of smoking articles can be extracted;
a wrapping conveyor (13), which is arranged downstream of the forming conveyor (12) and is designed to move the group (5) of smoking articles and the wrapping sheet (7) along a straight wrapping path (P2) so as to fold the wrapping sheet (7) around the group (5) of smoking articles and, hence, form the wrap (3);
a transfer conveyor (19), which receives the wrap (3) from the wrapping conveyor (13) and moves along a transfer path (P3), which is perpendicular to the wrapping path (P2); and
a transport unit (22), which is interposed between the wrapping conveyor (13) and the transfer conveyor (19) and is configured to receive the wrap (3) from the wrapping conveyor (13) and release the wrap (3) in the transfer conveyor (19);
wherein the transport unit (22) comprises: a drawer (25) provided with a frame (26), in which is defined a pocket (27) configured to house the product (3) and delimited, on a side, by a containing wall (30), which, in use, comes into contact with the product (3);
**characterized by** a conveyor device (32) configured to move the drawer (25) along the wrapping path (P2);
wherein the containing wall (30) is mounted on the frame (26) in a movable manner so as to move between a loading and unloading position, in which it gives the pocket (27) a first dimension (D1), and a transport position, in which it gives the pocket (27) a second dimension (D2) smaller than the first dimension (D1).

2. The packer machine (9) according to claim 1 and comprising an actuator device (33), which can be operated so as to push the containing wall (30) towards the transport position.

3. The packer machine (9) according to claim 2, wherein the actuator device (33) is pneumatic.

4. The packer machine (9) according to claim 3, wherein the actuator device (33) comprises an actuation chamber (34), which is arranged next to the containing wall (30), can be connected to a source (35) of fluid under pressure and is configured to press against the containing wall (30) when it is in overpressure conditions.

5. The packer machine (9) according to claim 4, wherein the actuator device (33) comprises a flexible wall (36), which is elastically deformable, delimits the actuation chamber (34), is directly in contact with the containing wall (30) and swells pressing against the containing wall (30) when the actuation chamber (34) is in overpressure conditions.

6. The packer machine (9) according to claim 5, wherein the flexible wall (36) comprises a central area (38) having a first thickness and a peripheral area (39), which is arranged around the central area (38) and has a second thickness, which is greater than the first thickness.

7. The packer machine (9) according to claim 6, wherein the central area (38) is flat, is coplanar to the containing wall (30) and is directly in contact with the containing wall (30), whereas the peripheral area (39) is curved and causes the flexible wall (36) to be cup-shaped.

8. The packer machine (9) according to one of the claims from 2 to 7 and comprising at least one first elastic element (41), which pushes the containing wall (30) towards the loading and unloading position and elastically deforms when the actuator device (33) moves the containing wall (30) towards the transport position.

9. The packer machine (9) according to one of the claims from 1 to 8 and comprising at least one first striker body (47), against which the containing wall (30) rests in the loading and unloading position.

10. The packer machine (9) according to claim 9, wherein the first striker body (47) is screwed into a threaded hole (48) of the frame (26) and can be screwed or unscrewed in order to change the first dimension (D1) assumed by the pocket (27) when the containing wall (30) is in the loading and unloading position.

11. The packer machine (9) according to claim 1 and comprising at least one second elastic element, which pushes the containing wall (30) towards the transport position.

## Patentansprüche

1. Verpackungsmaschine (9) zum Herstellen einer starren Verpackung (1) für Rauchartikel, umfassend: eine Hülle (3), die durch Falten einer Umhüllungsfolie (7) um eine Gruppe (5) von Rauchartikeln gebildet wird, und einen Außenbehälter (2), der durch Falten eines Rohlings (8) um die Hülle (3) gebildet wird; wobei die Verpackungsmaschine (9) umfasst:
einen Formungsförderer (12), der mehrere erste Taschen (11) entlang eines Formungspfads (P1) bewegt;
einen Trichter (10), der vor dem Formungsförderer (12) und entlang des Formungspfads (P1) angeordnet ist und mit mindestens einer Ausgabeöffnung versehen ist, aus der die Gruppe (5) von Rauchartikeln extrahiert werden kann;
einen Umhüllungsförderer (13), der stromabwärts des Formungsförderers (12) angeordnet ist und dafür ausgelegt ist, die Gruppe (5) von Rauchartikeln und die Umhüllungsfolie (7) entlang eines geraden Umhüllungspfads (P2) zu bewegen, um die Umhüllungsfolie (7) um die Gruppe (5) von Rauchartikeln zu falten und somit die Hülle (3) zu bilden;
einen Transferförderer (19), der die Hülle (3) von dem Umhüllungsförderer (13) empfängt und entlang eines Transferpfads (P3) bewegt, der senkrecht zu dem Umhüllungspfad (P2) ist; und
eine Transporteinheit (22), die zwischen dem Umhüllungsförderer (13) und dem Transferförderer (19) eingefügt ist und konfiguriert ist, die Hülle (3) von dem Umhüllungsförderer (13) zu empfangen und die Hülle (3) zu dem Transferförderer (19) freizugeben;
wobei die Transporteinheit (22) umfasst: eine Schublade (25), die mit einem Rahmen (26) versehen ist, in der eine Tasche (27) definiert ist, die konfiguriert ist, das Produkt (3) aufzunehmen, und auf einer Seite durch eine enthaltene Wand (30) begrenzt wird, die im Einsatz mit dem Produkt (3) in Kontakt gelangt;
**gekennzeichnet durch** eine Fördervorrichtung (32), die konfiguriert ist, die Schublade (25) entlang des Umhüllungspfads (P2) zu bewegen;
wobei die enthaltene Wand (30) auf dem Rahmen (26) in einer beweglichen Weise montiert ist, um zwischen einer Lade- und einer Entladeposition, in der sie der Tasche (27) eine erste Abmessung (D1) verleiht, und einer Transportposition, in der sie der Tasche (27) eine zweite Abmessung (D2) verleiht, die kleiner als die erste Abmessung (D1) ist, bewegt zu werden.

2. Verpackungsmaschine (9) nach Anspruch 1, und umfassend eine Aktuatorvorrichtung (33), die betrieben werden kann, um die enthaltene Wand (30) in Richtung der Transportposition zu schieben.

3. Verpackungsmaschine (9) nach Anspruch 2, wobei die Aktuatorvorrichtung (33) pneumatisch ist.

4. Verpackungsmaschine (9) nach Anspruch 3, wobei die Aktuatorvorrichtung (33) eine Betätigungskammer (34) umfasst, die neben der enthaltenen Wand (30) angeordnet ist, mit einer Quelle (35) eines druckbeaufschlagten Fluids verbunden werden kann und konfiguriert ist, gegen die enthaltene Wand (30) zu pressen, wenn sie sich in einem Überdruckzustand befindet.

5. Verpackungsmaschine (9) nach Anspruch 4, wobei die Aktuatorvorrichtung (33) eine flexible Wand (36) aufweist, die elastisch verformbar ist, die die Betätigungskammer (34) begrenzt, sich in direktem Kontakt mit der enthaltenen Wand (30) befindet und anschwillt und gegen die enthaltene Wand (30) presst, wenn sich die Betätigungskammer (34) in einem Überdruckzustand befindet.

6. Verpackungsmaschine (9) nach Anspruch 5, wobei die flexible Wand (36) einen zentralen Bereich (38), der eine erste Dicke aufweist, und einen Randbereich (39) umfasst, der um den zentralen Bereich (38) angeordnet ist und eine zweite Dicke aufweist, die größer ist als die erste Dicke.

7. Verpackungsmaschine (9) nach Anspruch 6, wobei der zentrale Bereich (38) flach ist, koplanar zu der enthaltenen Wand (30) ist und sich in direktem Kontakt mit der enthaltenen Wand (30) befindet, wohingegen der Randbereich (39) gekrümmt ist und bewirkt, dass die flexible Wand (36) schalenförmig ist.

8. Verpackungsmaschine (9) nach einem der Ansprüche 2 bis 7, und umfassend mindestens ein erstes elastisches Element (41), das die enthaltene Wand (30) in Richtung der Lade- und Entladeposition schiebt und sich elastisch verformt, wenn die Aktuatorvorrichtung (33) die enthaltene Wand (30) in Richtung der Transportposition bewegt.

9. Verpackungsmaschine (9) nach einem der Ansprüche 1 bis 8 und umfassend mindestens einen ersten Anschlagkörper (47), an der die enthaltene Wand (30) in der Lade- und Entladeposition anliegt.

10. Verpackungsmaschine (9) nach Anspruch 9, wobei der erste Anschlagkörper (47) in ein Gewindeloch (48) des Rahmens (26) geschraubt ist und eingeschraubt oder herausgeschraubt werden kann, um die erste Abmessung (D1), die von der Tasche (27) angenommen wird, zu ändern, wenn sich die enthaltene Wand (30) in der Lade- und Entladeposition befindet.

11. Verpackungsmaschine (9) nach Anspruch 1 und umfassend mindestens ein zweites elastisches Element, das die enthaltene Wand (30) in Richtung der Transportposition schiebt.

## Revendications

1. Empaqueteuse (9) pour produire un paquet rigide (1) pour des articles à fumer comprenant : un emballage (3) formé par pliage d'une feuille d'emballage (7) autour d'un groupe (5) d'articles à fumer, et un conteneur extérieur (2) formé par pliage d'une ébauche (8) autour de l'emballage (3) ; l'empaqueteuse (9) comprend :
un transporteur de formage (12), qui déplace une pluralité de premières poches (11) le long d'une voie de formage (P1) ;
une trémie (10), qui est placée devant le transporteur de formage (12) et le long de la voie de formage (P1), et qui est dotée d'au moins une ouverture de sortie, par laquelle le groupe (5) d'articles à fumer peut être extrait ;
un transporteur d'emballage (13), qui est agencé en aval du transporteur de formage (12) et est conçu pour déplacer le groupe (5) d'articles à fumer et la feuille d'emballage (7) le long d'une voie d'emballage rectiligne (P2) de manière à plier la feuille d'emballage (7) autour du groupe (5) d'articles à fumer et, par conséquent, former l'emballage (3) ;
un transporteur de transfert (19), qui reçoit l'emballage (3) provenant du transporteur d'emballage (13) et se déplace le long d'une voie de transfert (P3), qui est perpendiculaire à la voie d'emballage (P2) ; et
une unité de transport (22), qui est interposée entre le transporteur d'emballage (13) et le transporteur de transfert (19) et est configurée pour recevoir l'emballage (3) provenant du transporteur d'emballage (13) et libérer l'emballage (3) dans le transporteur de transfert (19) ;
dans laquelle l'unité de transport (22) comprend : un tiroir (25) doté d'un cadre (26), dans lequel est définie une poche (27) configurée pour loger le produit (3) et délimitée, d'un côté, par une paroi de confinement (30), qui, lors de l'utilisation, entre en contact avec le produit (3) ;
**caractérisée par**
un dispositif de transport (32) configuré pour déplacer le tiroir (25) le long de la voie d'emballage (P2) ;
dans laquelle la paroi de confinement (30) est montée sur le cadre (26) de manière mobile afin de se déplacer entre une position de chargement et de déchargement, dans laquelle elle confère à la poche (27) une première dimension (D1), et une position de transport, dans laquelle elle confère à la poche (27) une deuxième dimension (D2) inférieure à la première dimension (D1).

2. Empaqueteuse (9) selon la revendication 1 et comprenant un dispositif d'actionnement (33), qui peut être actionné de manière à pousser la paroi de confinement (30) vers la position de transport.

3. Empaqueteuse (9) selon la revendication 2, dans laquelle le dispositif d'actionnement (33) est pneumatique.

4. Empaqueteuse (9) selon la revendication 3, dans laquelle le dispositif d'actionnement (33) comprend une chambre d'actionnement (34), qui est agencée à côté de la paroi de confinement (30), peut être raccordée à une source (35) de fluide sous pression et est configurée pour appuyer contre la paroi de confinement (30) lorsqu'elle est en surpression.

5. Empaqueteuse (9) selon la revendication 4, dans laquelle le dispositif d'actionnement (33) comprend une paroi souple (36), qui est élastiquement déformable, délimite la chambre d'actionnement (34), est directement en contact avec la paroi de confinement (30) et gonfle en appuyant contre la paroi de confinement (30) lorsque la chambre d'actionnement (34) est en surpression.

6. Empaqueteuse (9) selon la revendication 5, dans laquelle la paroi souple (36) comprend une zone centrale (38) ayant une première épaisseur et une zone périphérique (39), qui est agencée autour de la zone centrale (38) et a une deuxième épaisseur, qui est supérieure à la première épaisseur.

7. Empaqueteuse (9) selon la revendication 6, dans laquelle la zone centrale (38) est plate, est coplanaire à la paroi de confinement (30) et est directement en contact avec la paroi de confinement (30), tandis que la zone périphérique (39) est incurvée et donne à la paroi souple (36) une forme de coupe.

8. Empaqueteuse (9) selon l'une des revendications 2 à 7 et comprenant au moins un premier élément élastique (41), qui pousse la paroi de confinement (30) vers la position de chargement et de déchargement et se déforme élastiquement lorsque le dispositif d'actionnement (33) déplace la paroi de confinement (30) vers la position de transport.

9. Empaqueteuse (9) selon l'une des revendications 1 à 8 et comprenant au moins un premier corps d'impact (47), contre lequel repose la paroi de confinement (30) dans la position de chargement et de déchargement.

10. Empaqueteuse (9) selon la revendication 9, dans laquelle le premier corps d'impact (47) est vissé dans un trou fileté (48) du cadre (26) et peut être vissé ou dévissé afin de modifier la première dimension (D1) prise par la poche (27) lorsque la paroi de confinement (30) est dans la position de chargement et de déchargement.

11. Empaqueteuse (9) selon la revendication 1 et comprenant au moins un deuxième élément élastique, qui pousse la paroi de confinement (30) vers la position de transport.
